# EUROPÄISCHE PATENTSCHRIFT

(11) **EP 2 181 000 B1**
(45) Veröffentlichungstag und Bekanntmachung des Hinweises auf die Patenterteilung: **19.10.2011**
(21) Anmeldenummer: 08787012.7
(22) Anmeldetag: 07.08.2008
(51) Int. Cl.: B60C 1/00, C08K 3/00, C08K 3/04, C08L 7/00, C08L 21/00, C08F 36/04

(54) **NANOSTRUKTURIERTE POLYMERE AUF BASIS VON KONJUGIERTEN DIENEN**
NANOSTRUCTURED POLYMERS ON THE BASIS OF CONJUGATED DIENES
POLYMÈRES NANOSTRUCTURÉS À BASE DE DIÈNES CONJUGUÉS

(30) Priorität: 16.08.2007 DE 102007038439
(43) Veröffentlichungstag der Anmeldung: 05.05.2010
(73) Patentinhaber: LANXESS Deutschland GmbH, 51369 Leverkusen (DE)
(72) Erfinder: KLOPPENBURG, Heike, 40625 Düsseldorf (DE); GROSS, Thomas, 42489 Wülfrath (DE); LUCASSEN, Alex, 41540 Dormagen (DE); HARDY, Dave, 41541 Dormagen (DE)
(86) Internationale Anmeldenummer: PCT/EP2008/060416
(87) Internationale Veröffentlichungsnummer: WO 2009/021906

(56) Entgegenhaltungen:
- EP-A- 1 095 952
- WO-A-01/34658
- US-A- 4 503 204
- US-A1- 2005 137 338

## Beschreibung

Die vorliegende Erfindung betrifft nanostrukturierte Dien-Polymere, deren Herstellung sowie deren Verwendung.

Vor allem für den Einsatz im Reifenbau werden lebende, z.T. Alkali-terminierte Polymere, auf Basis von konjugierten Dienen oder auf Basis von konjugierten Dienen und vinylaromatischen Verbindungen mit besonders dafür geeigneten organischen oder anorganischen Verbindungen verknüpft (gekoppelt), wobei insbesondere die Verarbeitungseigenschaften sowie die physikalischen und dynamischen Eigenschaften, insbesondere solche, die im Zusammenhang mit dem Rollwiderstand bei Reifen stehen, verbessert werden.

Als Verknüpfungs-/Kopplungsmittel für die genannten Kautschuke werden in der Technik neben den verschiedensten organischen Verbindungen mit entsprechenden, zur Verknüpfung mit den lebenden Polymeren fähigen Gruppierungen, wie Epoxidgruppen (DE-A 19 857 768), Isocyanatgruppen, Aldehydgruppen, Ketogruppen, Estergruppen sowie Halogenidgruppen, vor allem entsprechende Silicium- oder Zinn-Verbindungen (EP-A 0 890 580 und EP-A 0 930 318) eingesetzt, wie deren Halogenide, Sulfide oder Amine. In DE-A 19 803 039 sind Kautschuk-Zusammensetzungen für Hochleistungs-Reifen-Laufflächen beschrieben, deren zugrunde liegenden Kautschuke teilweise mit Zinn-, Phosphor-, Gallium- oder Silicium-Verbindungen gekoppelt wurden.

Ebenfalls bekannt sind verschiedene Methoden zur Endgruppenfunktounalisierung von Polydienen. Bei dem durch neodymhaltige Systeme katalysierten Polybutadien finden beispielsweise Epoxide, substituierte Ketoverbindungen aus der Gruppe der Ketone, Aldehyde oder Säurederivate, substituierte Isocyanate, Verwendung, wie z.B. in US A 4906706 beschrieben. Bekannt ist ebenfalls die Wirkungsweise der Endgruppenmodifizierung mit zweifach funktionalisierten Reagenzien. Diese reagieren mit der polaren funktionellen Gruppe mit dem Polydien und bauen mit einer zweiten polaren funktionellen Gruppe im Molekül eine Wechselwirkung zum Füllstoff auf, wie beispielsweise in WO 01/34658 oder US-A 6992147 beschrieben.

Die bisher verwendeten Verknüpfungsmittel sind zum Teil mit noch erheblichen Nachteilen verbunden, so z.B. dass diese bei durch Seltene Erden, insbesondere durch Neodymhaltige Systeme katalysierten Dien Polymerisationen zu einer Endgruppenmodifizierung führen und somit als Koppler nicht geeignet sind.

Aufgabe der vorliegenden Erfindung war es nun, nanostrukturierte Dien-Polymere bereitzustellen, die eine gutes Verarbeitungsverhalten und durch ihren nanostrukturierten Polymeranteil ein verbessertes Eigenschaftsprofil in Kautschukcompounds besitzen.

Gegenstand der vorliegenden Erfindung sind nanostrukturierte Polymere auf Basis von konjugierten Dienen, erhältlich durch Polymerisation konjugierter Diene mit Katalysatoren der Seltenen Erden und anschließender Umsetzung mit einem Nanokoppler, wobei die erhaltenen Polymere eine bimodale Molmassenverteilung besitzen, bei dem der hochmolekulare Anteil eine mittlere Molmasse von größer als 2.000.000 g/mol, bevorzugt größer als 5.000.000 g/mol besitzt, die Menge der hochmolekularen Anteile bezogen auf das gesamte Polymer im Bereich von 1% bis 20%, bevorzugt 3 bis 15% liegt, der Gelgehalt des gesamten Polymeren <1% beträgt und der Gehalt an 1,2-Vinyleinheiten bezogen auf das Polymere zwischen 0,3 und 1 Gew.-% beträgt.

Als konjugierte Diene können alle bekannten Diene eingesetzt werden, die für die Herstellung entsprechender Polymeranionen üblich sind. Beispielsweise sind zu nennen: 1,3-Butadien, 2,3-Dimethyl-1,3-butadien, 3-Butyl-1,3-octadien, Isopren, Piperylen, 1,3-Hexadien, 1,3-Octadien, 2- und/oder Phenyl-1,3-butadien, bevorzugt 1,3-Butadien und Isopren, sowie Mischungen derselben.

Als Katalysatoren werden dabei vorzugsweise Verbindungen der Seltenen Erdmetalle eingesetzt, wie beispielsweise näher beschrieben in EP-B 011184 oder EP-A 1245600. Ebenfalls möglich sind alle für die Polymerisation bekannten Ziegler-Natta-Katalysatoren, wie beispielsweise solche auf Basis von Titan-, Kobalt-, Vanadium- oder Nickel-Verbindungen sowie auf Basis von Verbindungen der Seltenen Erdmetalle. Die genannten Ziegler-Natta-Katalysatoren können sowohl einzeln als auch im Gemisch untereinander eingesetzt werden.

Bevorzugt werden Ziegler-Natta-Katalysatoren auf Basis von Verbindungen der Seltenen Erdmetalle eingesetzt, wie Cer-, Lanthan-, Praseodym-, Gadolinium- oder Neodymverbindungen, die in Kohlenwasserstoffen löslich sind. Besonders bevorzugt werden die entsprechenden Salze der Seltenen Erdmetalle als Ziegler-Natta-Katalysatoren eingesetzt, wie Neodym-carboxylate, insbesondere Neodym-neodecanoat, Neodymoctanoat, Neodymnaphthenat, Neodym-2,2-diethyl-hexanoat oder Neodym-2,2-diethyl-heptanoat, sowie die entsprechenden Salze des Lanthans oder Praseodyms. Weiterhin umfassen die einsetzbaren Ziegler-Natta-Katalysatoren auch Katalysatorsysteme auf Basis von Metallocenen, wie z.B. in folgender Literatur beschrieben: EP-A 919 574, EP-A 1025136 und EP-A 1078939.

Als Nanokoppler werden solche Verbindungen eingesetzt, die mit den Polymeren reagieren, zum Teil an das Polymer ankoppeln und in einer nachgelagerten Reaktion Nanostrukturen bilden, wobei sich die mittlere Molmasse dieser Nanoteilchen mindestens um den FAktor 5, bevorzugt um den Faktor 7 erhöht.

Bevorzugte Nanokoppler sind oligomere Silikate der Formel

X₃-Si-(O-Si X₂)ₙ-X,

wobei
X = ein Alkoholat der Formel OR ist, wobei R ein gesättigter oder teilweise ungesättiger aliphatischer Kohlenwasserstoffrest mit 1 bis 30 C-Atomen, ein cycloaliphatischer Kohlenwasserstoffrest mit 5 bis 30 C-Atomen oder ein aromatischer Kohlenwasserstoffrest mit 6 bis 30 C-Atomen und
n eine Zahl größer 0, bevorzugt größer 1 und besonders bevorzugt größer 2 ist.

Beispiele für bevorzugte Nanokoppler der genannten Art sind
(RO)₃Si-O-Si(OR)₃,
(RO)₃Si-O-Si(OR)₂-O-Si(OR)₃,
(RO)₃Si-O-Si(OR)₂-O-Si(OR)₂-O-Si(OR)₃,
(RO)₃Si-O-Si(OR)₂-O-Si(OR)₂-O-Si( OR)₂-O-Si(OR)₃,
(RO)₃Si-O-Si(OR)₂-O-Si(OR)₂O-Si(OR)₂-O-Si(OR)₂-O-Si(OR)₃ oder
(RO)₃Si-O-Si(OR)₂-O-Si(OR)₂-O-Si(OR)₂-O-Si(OR)₂-O-Si(OR)₂-O-Si(OR)₃
mit R gleich Methyl, Ethyl, Vinyl, Propyl, iso-Propyl, Butyl, Pentyl, Hexyl, Octyl und ihren Isomeren. Diese oligomeren Silikate sind handelsüblich und werden vorzugsweise durch Kondensation von Siliciumtetraalkoholaten gebildet und können definierte Verbindungen oder Gemische von Verbindungen mit unterschiedlichem Kondensationsgrad sein.

Oligomere Silikate sind zum Beispiel unter dem Handelnamen Dynasil® 40 der Firma Degussa erhältlich.

Weniger geeignet sind solche Verbindungen, die Gruppen mit acidem Wasserstoff enthalten, wie er zum Beispiel NH-Gruppen, OH-Gruppen oder COOH-Gruppen enthalten ist.

Die Menge der eingesetzten Nanokoppler richtet sich nach dem gewünschten Modifizierungsgrad. Bevorzugt liegt das Verhältnis von Nanokoppler zu Polymeren im Bereich von 0,001 bis 10 g : 100 g, insbesondere 0,01 bis 6 g zu 100 g.

Die Reaktion zur Ausbildung dieser Nanostrukturen kann in einer oder mehreren Stufen erfolgen. Besonders bevorzugt ist, dass der Nanokoppler in einer ersten Reaktion an die lebende Polymergruppe angebunden wird und in einer zweiten Stufe unter Zusammenlagerung mit anderen modifizierten Polymergruppen zu den beschriebenen Nanostrukturen agglomeriert.

Bevorzugt erfolgt die Agglomeration während der Aufarbeitung des Polymeren, wie zum Beispiel während des Strippprozesses, wenn das Polymer zum Beispiel mit Wasser in Kontakt kommt. Die Nanokoppler können in einer bevorzugten Ausführungsform an dieser Stelle miteinander reagieren. Das kann zum Beispiel geschehen, indem die freien Gruppen der Nanokoppler, an denen keine Polymergruppen gebunden sind, miteinander reagieren und damit zwei oder mehrere Nanokoppler miteinander verbinden, die ihrerseits jeweils eine oder mehrere Polymergruppen tragen können.

Gegenstand der Erfindung ist zudem ein Verfahren zur Herstellung von nanostrukturierten Polymeren auf Basis von konjugierten Dienen, dadurch gekennzeichnet, dass man zunächst in Gegenwart von inerten organischen, aprotischen Lösungsmitteln und in Gegenwart eines Katalysators der Seltenen Erden konjugierte Diene polymerisiert, die nach der Polymerisation erhaltenen Polymere auf Basis der genannten Monomeren mit Nanokopplern der Formel

X₃-Si-(O-Si X₂)ₙ - X

umsetzt, wobei
X ein Alkoholat der Formel OR, wobei R ein gesättigter oder teilweise ungesättiger aliphatischer Kohlenwasserstoffrest mit 1 bis 30 C-Atomen, ein cycloaliphatischer Kohlenwasserstoffrest mit 5 bis 30 C-Atomen oder ein aromatischer Kohlenwasserstoffrest mit 6 bis 30 C-Atomen ist und
n ein Zahl größer 0, bevorzugt größer 1 und besonders bevorzugt größer 2 ist und
die Menge der eingesetzten Nanokoppler zu Polymeren im Bereich von 0,001 bis 10 g zu 100 g liegt.

Bei dem erfindungsgemäßen Verfahren reagiert der Nanokoppler mit den Polymeren, indem der Nanokoppler zuerst die Endgruppe des lebenden Polymeren modifiziert und weiterhin der Nanokoppler in einer nachfolgenden Stufe zu höhermolekularen Strukturen kondensiert.

Die Herstellung der erfindungsgemäßen nanostrukturierten Polymere erfolgt in aufeinander folgenden Schritten. Zuerst wird das Polydien hergestellt, welches danach mit einem oder mehreren der vorstehend definierten Nanokoppler umgesetzt wird, die dann zum Beispiel unter Kondensation zu nanostrukturierten Polymeren reagieren können. Diese Nanokoppler können je nach den gewünschten Eigenschaften der herzustellenden Polymeren zu jedem beliebigen Zeitpunkt der Polymerisation zugegeben werden.

Die Polymerisation der konjugierten Diene wird im Allgemeinen so durchgeführt, dass ein Katalysatorsystem mit dem jeweiligen Dien umgesetzt wird, um die Dienpolymere zu bilden.

Die Polymerisation der konjugierten Diene wird vorzugsweise in Gegenwart der bereits genannten Ziegler-Natta-Katalysatoren nach gängigen Verfahren durchgeführt (siehe EP-B 011184 oder EP-A 1245600).

Vorzugsweise wird das erfindungsgemäße Verfahren in Gegenwart von inerten, aprotischen Lösungsmitteln durchgeführt. Solche inerte aprotische Lösungsmittel können paraffinische Kohlenwasserstoffe sein, wie isomere Pentane, Hexane, Heptane, Octane, Decane, 2,4-Trimethylpentan, Cyclopentan, Cyclohexan, Methylcyclohexan, Ethylcyclohexan oder 1,4-Dimethylcyclohexan, oder aromatische Kohlenwasserstoffe, wie Benzol, Toluol, Ethylbenzol, Xylol, Diethylbenzol oder Propylbenzol. Diese Lösungsmittel können einzeln oder in Kombination verwendet werden. Bevorzugt sind Cyclohexan und n-Hexan.

Die Menge an Lösungsmitteln kann in einem weiten Bereich variieren. Sie beträgt üblicherweise etwa 300 bis 1500 Gew.-Teile pro 100 Gew.-Teile Gesamtmonomere.

Die Polymerisationstemperatur kann in weiten Bereichen schwanken und liegt im Allgemeinen im Bereich von 0°C bis 200°C, bevorzugt bei 40°C bis 130°C. Die Reaktionszeit schwanz ebenfalls in breiten Bereichen von einigen Minuten bis zu einigen Stunden. Üblicherweise wird die Polymerisation innerhalb einer Zeitspanne von etwa 30 Minuten bis zu 8 Stunden, bevorzugt 1 bis 4 Stunden, durchgeführt. Sie kann sowohl bei Normaldruck, als auch bei erhöhtem Druck (1 bis 10 bar) durchgeführt werden.

Die Herstellung der erfindungsgemäßen Polymere kann sowohl in diskontinuierlicher als auch in kontinuierlicher Fahrweise erfolgen. Bevorzugt ist die kontinuierliche Fahrweise in einer Reaktorkaskade, bestehend aus mehreren, bevorzugt mindestens 2, insbesondere 2 bis 5, in Reihe geschalteten Reaktoren.

Die Polymerisation erfolgt bevorzugt bis zum vollständigen Umsatz der eingesetzten Diene. Selbstverständlich ist es auch möglich, die Dienpolymerisation in Abhängigkeit der gewünschten Polymereigenschaften vorzeitig zu unterbrechen, beispielsweise beim Umsatz von ca. 80 % der Monomeren. Nach der Dienpolymerisation kann das nicht umgesetzte Dien beispielsweise durch eine Entspannungsdestillation (Flashstufe) abgetrennt werden.

Zur Reaktion mit dem Nanokoppler wird die bei der Polymerisation erhaltene Polymerisationsmischung mit den genannten Nanokopplern vermischt.

Dies wird bevorzugt im gleichen aprotischen organischen Lösungsmittel oder Lösungsmittelgemisch durchgeführt, in dem auch die Dienpolymere hergestellt wurden. Selbstverständlich ist es auch möglich, das Lösungsmittel zu wechseln oder die Nanokoppler in einem anderen Lösungsmittel zuzugeben. Als aprotische organische Lösungsmittel kommen beispielsweise in Betracht: Pentane, Hexane, Heptane, Cyclohexan, Methylcyclopentan, Benzol, Toluol, Ethylbenzol, bevorzugt Hexane, Cyclohexan, Toluol, ganz besonders bevorzugt Hexan. Weiterhin ist es auch möglich, polare organische Verbindungen zuzugeben, die beispielsweise als Lösemittel des Nanokopplers dienen können.

Bei der Reaktion ist darauf zu achten, dass störende Verbindungen, die die Anbindung des Nanokopplers an das Polymer beeinträchtigen könnten, bevorzugt nicht vorhanden sind. Solche störenden Verbindungen sind z.B. Kohlendioxid, Sauerstoff, Wasser, Alkohole, organische und anorganische Säuren.

Die Umsetzung der Dienpolymere mit den Nanokopplern wird vorzugsweise ohne Zwischenisolierung der Polymere in situ durchgeführt, wobei die Dienpolymere nach der Polymerisation, gegebenenfalls durch eine Entspannungsdestillation (Flashstufe) ohne weitere Zwischenbehandlung mit den Nanokopplern umgesetzt werden.

Die Menge der eingesetzten Nanokoppler richtet sich nach dem gewünschten Modifizierungsgrad. Bevorzugt liegt das Verhältnis von Nanokoppler zu Polymeren im Bereich von 0,001 bis 10 g : 100 g, insbesondere 0,01 bis 6 g zu 100 g.

Die Reaktion mit den Nanokopplern wird üblicherweise bei Temperaturen durchgeführt, die in etwa den Temperaturen der Polymerisationsreaktion entsprechen. Dies bedeutet, dass die Reaktion bei Temperaturen von etwa 0°C bis 200°C, vorzugsweise 40°C bis 130°C durchgeführt wird. Die Reaktion kann ebenfalls bei Normaldruck als auch bei erhöhtem Druck (1 bis 10 bar) durchgeführt werden.

Die Reaktionszeit ist vorzugsweise relativ kurz. Sie liegt im Bereich von etwa 1 Minute bis etwa 1 Stunde.

Nach der Reaktion mit den Nanokopplern werden die nunmehr endgruppenmodifizierten Polymere zu Nanostrukturen verbunden, indem man die Reaktionsmischung bevorzugt mit Wasser in Kontakt bringt. Das kann durch eine separate Zugabe von Wasser zu der Polymerlösung oder durch Einleiten von Wasserdampf während des Strippprozesses erfolgen. Es ist auch möglich, zusätzlich mit oder vor der Zugabe des Wassers andere protische Reagenzien zuzugeben, wie Alkohole oder Carbonsäuren. Darüber hinaus ist es von Vorteil, wenn der Reaktionsmischung Antioxidantien zugesetzt werden, bevor das nanostrukturierte Polymer isoliert wird.

Weiterhin ist es möglich, die in Gegenwart der Ziegler-Natta-Katalysatoren erhaltenen und mit den Nanokopplern umgesetzten Polymere in bekannter Weise zu isolieren, zu reinigen und anschließend aufzuarbeiten.

Die Abtrennung des erfindungsgemäßen Polymers kann in üblicher Weise etwa durch Wasserdampfdestillation oder Ausflockung mit einem geeigneten Ausflockungsmittel, wie Alkoholen erfolgen. Das ausgeflockte Polymer wird dann beispielsweise durch Zentrifugieren oder Extrudieren aus dem resultierenden Medium entfernt. Restliches Lösungsmittel und andere flüchtige Bestandteile lassen sich durch Erwärmen, gegebenenfalls unter vermindertem Druck oder in einem Gebläseluftstrom, aus dem isolierten Polymer entfernen.

Das Molekulargewicht der erfindungsgemäßen nanostrukturierten Polymere kann in weiten Bereichen variieren. Für die üblichen Anwendungen der erfindungsgemäßen Polymere liegt das mittlere Zahlenmittel des Molekulargewichts (Mn) des gesamten Polymeren im Bereich von etwa 100.000 bis etwa 500.000 g/mol, wobei das Molekulargewicht eine bimodale Verteilung besitzt und wobei der hochmolekulare Anteil gegenüber dem niedermolekularen Anteil in der mittleren Molmasse mindestens um den Faktor 5, bevorzugt um den Faktor 8 und besonders bevorzugt um den Faktor 10 erhöht ist und der hochmolekulare Anteil in der GPC-Analytik eine mittlere Molmasse von größer als 2.000.000 g/mol, bevorzugt größer als 5.000.000 g/mol besitzt. Die Menge der hochmolekularen Anteile bezogen auf das gesamte Polymer liegt im Bereich von 1% bis 20%, bevorzugt 3 bis 15%.

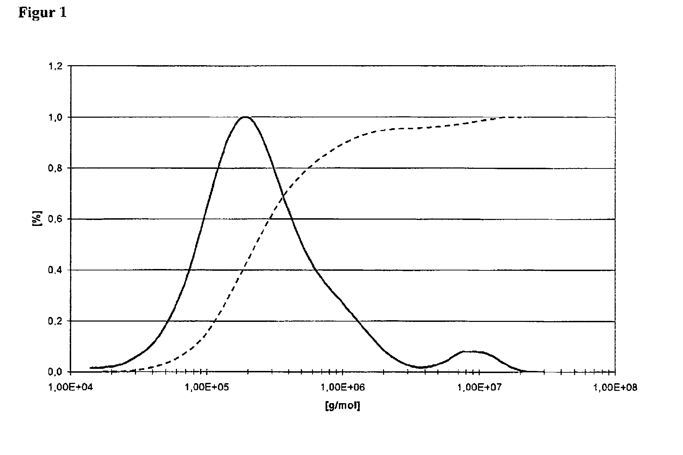

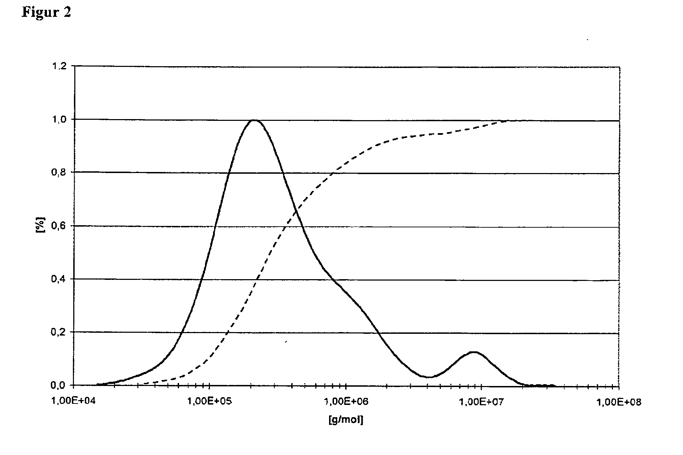

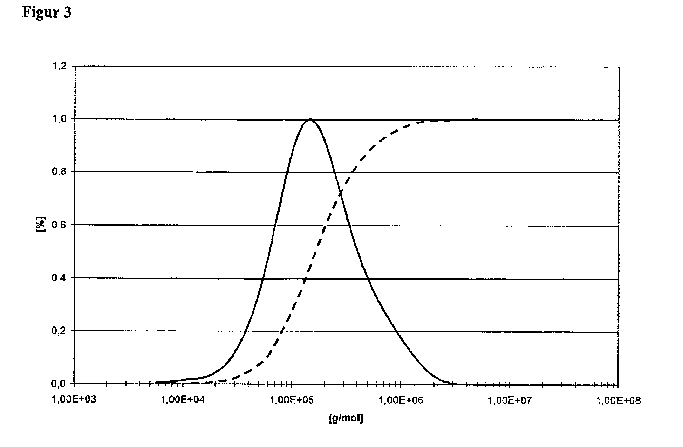

Anhand der Figuren 1 und 2 wird die Erfindung näher erläutert. In diesen wird der relative Anteil der Polymeren in Relation zur Molmasse in g/mol dargestellt. Die durchgehende Linie beschreibt die Molmassenverteüung über der Molmasse. Die gestrichelte Linie ist das dazu gehörende Integral. Aus beiden Grafiken ist anhand der Beispiele 2 (Figur 1) und 4 (Figur 2) sehr gut die Bimodalität der erfindungsgemäßen Polymere nach der Kopplung erkennbar. In der Molmassenverteilung zeigt sich die Bimodalität durch zwei separate Peaks, die durch ein Minimum voneinander getrennt sind. Das Integral trennt beide Peaks entsprechend zur Molmassenverteilung durch einen Umschlagpunkt im Kurvenverlauf. Dies wird besonders deutlich im Vergleich zu Figur 3, die die Kurve des Vergleichspolymers ohne Nanokoppler zeigt. In diesem Beispiel zeigt die Molmassenverteilung nur einen Peak und das Integral verläuft stetig ansteigend, so dass keine Bimodalität vorhanden ist.

Des Weiteren ist ersichtlich, dass nach der Kopplung der hochmolekulare Peak mit Molmassen oberhalb von 5.000.000 g/mol deutlich oberhalb des Grenzwertes von 2.000.000 g/mol liegt.

Das erfindungsgemäße nanostrukturierte Polymer weist das gleiche Löslichkeitsverhalten wie ein unmodifizierten Polymer auf. Der Gelgehalt des Polymeren liegt unter 1%. Die erfindungsgemäßen Polymere besitzen vorzugsweise einen Gehalt an 1,2-Bindungen (Vinylgehalt) von 0,3 bis 1 Gew.-%, vorzugsweise 0,4 bis 0,8 Gew.-%.

Selbstverständlich können den erfindungsgemäßen Polymeren noch die üblichen Compoundierkomponenten, wie Füllstoffe, Farbstoff, Pigmente, Erweichungsmittel und Verstärkungsmittel, zugesetzt werden. Darüber hinaus können die bekannten Kautschukhilfsmittel und Vernetzungsmittel zugesetzt werden.

Die erfindungsgemäßen nanostrukturierte Polymere können in bekannter Weise zur Herstellung von Vulkanisaten bzw. Kautschukformkörpern aller Art verwendet werden.

Beim Einsatz der erfindungsgemäßen nanostrukturierten Polymere in Reifenmischungen konnte eine deutliche Verbesserung der dynamischen Compoundeigenschaften erhalten werden.

Gegenstand der Erfmdung ist zudem die Verwendung der erfindungsgemäßen nanostrukturierten Polymere zur Herstellung von Reifen und Reifenbauteilen, Golfbällen und technischen Gummiartikeln sowie kautschukverstärkten Kunststoffen, wie z.B. ABS- und HIPS-Kunststoffen.

Die nachfolgenden Beispiele und Figuren dienen der Erläuterung der Erfindung, ohne dabei limitierend zu wirken.

### Beispiele

Die Polymerisationen wurden unter Ausschluss von Luft und Feuchtigkeit unter Stickstoff durchgeführt. Als Lösemittel wurde trockenes und sauerstofffreies technisches Hexan verwendet. Die Polymerisation wurde entsprechend der Ansatzgröße in einem Autoklav mit 21 bis 201-Volumen durchgeführt.

Die Umsatzbestimmungen erfolgten gravimetrisch; dabei wurden die Polymerlösungen nach der Probennahme (noch mit Lösemittel und Monomer) und nach der Trocknung (bei 65 °C im Valcuumtrockenschrank) gewogen.

Die Mooney-Messung ML 1+4 (100) wurde an einem Gerät der Firma Alpha mit dem großen Rotor nach einer Minute vorheizen über 4 min bei 100°C durchgeführt.

### Beispiel 1-4

In einem getrockneten und mit Stickstoff überlagerten 201-Stahlreaktor werden zu einer Lösung von 13 Gew.-% 1,3-Butadien in technischem Hexan unter Rühren eine Lösung von Diisobutylaluminiumhydrid in Hexan (DIBAH; Al(C₄H₉)₂H), eine Lösung von Ethylaluminiumsesquichlorid in Hexan (EASC, Al₂(C₂H₅)₃Cl₃) in äquimolarer Menge zum Neodymversatat und eine Lösung von Neodymversatat in Hexan (NdV, Nd(O₂C₁₀H₁₉)₃) zugegeben. Anschließend wird auf 73°C Vorlauftemperatur hochgeheizt. Nach dem Start der Reaktion ist die Umsetzung nach 60 min beendet und eine Polymerprobe wird gezogen. Anschließend wird das Modifizierungsreagenz mit 100 mL Hexan über eine Bürette unter Rühren zugegeben.

Die eingesetzten Mengen, der verwendete Nanokoppler und die Mooneywerte der einzelnen Polymerproben vor und nach der Kopplung sind in Tabelle 1 angegeben.

Nach einer Stunde Reaktionszeit wird die Reaktion durch Zusatz von 20 mL Wasser gestoppt, mit 2,6 g Irganox 1520L gelöst in 100 mL Hexan stabilisiert.

Im Beispiel 1 wird das Polymer anschließend mit ca. 10 L wasserhaltigem Ethanol ausgefällt und bei 60°C im Vakuumtrockenschrank getrocknet.

In den Beispiel 2 bis 5 wird das Polymer im Laborstripper aufgearbeitet und bei 60°C im Vakuumtrockenschrank getrocknet.

**Tabelle 1:**

| **Beispiel** | **1** | **2** | **3** | **4** | **5** |
|---|---|---|---|---|---|
| Hexan [g] | 1480 | 8500 | 8500 | 8500 | 8500 |
| 1,3-Butadien [g] | 250 | 1300 | 1300 | 1300 | 1300 |
| DIBAH 20 % [ml] | 4,0 | 21,6 | 21,6 | 21,6 | 21,6 |
| EASC 20% [ml] | 0,6 | 2,5 | 2,5 | 2,5 | 2,5 |
| NdV 8,8% [ml] | 0,6 | 2,8 | 2,8 | 2,8 | 2,8 |
| Dynasil 40 [g] | 0,2 | 13 | 26 | 39 | 65 |

| **vor Kopplung** | | | | | |
|---|---|---|---|---|---|
| ML 1+4 (100) [MU] | 25 | 32 | 33 | 34 | 35 |
| ML-Relax 30s [%] | | 4,4 | 5,4 | 5,4 | 5,4 |
| Mn [g/mol] | | 169500 | 144900 | 132200 | |
| Mw [g/mol] | | 495400 | 430200 | 485800 | |
| Mz [g/mol] | | 1778000 | 1329000 | 1657000 | |

| **nach Kopplung** | | | | | |
|---|---|---|---|---|---|
| ML 1+4(100) [MU] | 32 | 39 | 44 | 44 | 50 |
| ML-Relax 30s [%] | | 6,0 | 8,2 | 9,4 | 8,1 |
| Mn [g/mol] | | 179700 | 164500 | 202700 | |
| Mw [g/mol] | | 803400 | 701900 | 932500 | |
| Mz [g/mol] | | 4087000 | 5798000 | 6478000 | |

Dynasil 40: Ethyl-polysilicat (silicic ester) der Firma Degussa,
(OEt)₃-Si-(O-Si(OEt)₂)n-OEt mit n = 2 bis 3, SiO₂-Gehalt= 40-42%

Die erfindungsgemäßen Polymere zeichnen sich durch einen starken Anstieg der Mooneyviskosität nach der Kopplung aus, was eindeutig der Anstieg der Molmasse belegt, wie dies exemplarisch in den Figuren 1 und 2 für die Beispielen 2 und 4 dargestellt wird.

In den Figuren 1 und 2 wird der relative Anteil der Polymeren in Relation zur Molmasse in g/mol dargestellt.

Figur 1 stellt die Molmassenverteilung in Beispiel 2 nach der Kopplung dar und Figur 2 die Molmassenverteilung in Beispiel 4 nach der Kopplung.

Aus beiden Grafiken ist sehr gut die Bimodalität erkennbar (durchgezogene Linie). Des Weiteren ist ersichtlich, dass der hochmolekulare Peak bei Molmassen über 3.000.000 g/mol beginnt und mit mittleren Molmassen oberhalb von 5.000.000 g/mol deutlich oberhalb des Grenzwertes von 2.000.000 g/mol liegt (gestrichelte Linie).

### Gegenbeispiel 6-7

Die Versuche 6 und 7 wurden wie in Beispiel 2 beschrieben durchgeführt. Statt des Nanokopplers wurde SiCl₄) als Modifizierungsagenz eingesetzt. Das Polymer zeigte nach der Modifizierung keinen Mooneyanstieg. Die Mooney-Relax-Werte nach 30 sec lagen nach der Modifizierung bei beiden Versuchen mit unter 5 % im Bereich der nicht gekoppelten Polymere. Die Molmasse zeigt nach der Umsetzung mit SiCl₄ keine Bimodalität. Figur 3 stellt die Molmassenverteilung in Beispiel 7 nach der Umsetzung mit SiCl₄ dar. SiCl₄ zeigte keine Wirksamkeit als Nanokoppler.

**Tabelle 2**

| **Gegenbeispiel** | **6** | **7** |
|---|---|---|
| Hexan [g] | 8500 | 8500 |
| 1,3-Butadien [g] | 1300 | 1300 |
| DIBAH 20 % [ml] | 21,6 | 21,6 |
| EASC 20% [ml] | 2,5 | 2,5 |
| NdV 8,8% [ml] | 2,8 | 2,8 |
| SiCl₄ [g] | 13 | 39 |

| **vor Kopplung** | | |
|---|---|---|
| ML 1+4 (100) [MU] | 29 | 28 |
| ML-Relax 30s [%] | 6,3 | 6,3 |

| **nach Kopplung** | | |
|---|---|---|
| ML 1+4 (100) [MU] | 30 | 29 |
| ML-Relax 30 [%] | 4,5 | 4,8 |

### Gegenbeispiel 8, Beispiel 9-10

Für das Gegenbeispiel 8 wurde Buna™ CB24 der Firma Lanxess Deutschland GmbH eingesetzt. Für die Beispiele 9 und 10 wurden die Polymere der Beispiele 2 und 5 eingesetzt.

Bei vergleichbarer Mooneyviskosität der Compounds konnte bei den erfindungsgemäßen Beispielen 9 und 10 gegenüber dem Gegenbeispiel 8 der Weiterreißwiderstand erheblich verbessert werden.

Für die Mischungsstudien wurden folgende Substanzen eingesetzt:

| **Handelsname** | **Hersteller** |
|---|---|
| Buna™ CB24 als nichtfunktionalisiertes Polybutadien | Lanxess Deutschland GmbH |
| Ultrasil 7000 GR als Silica | KMF Laborchemie Handels GmbH |
| Si 69 als Silan | Degussa Hüls AG |
| Corax N 234 als Ruß | KMF Laborchemie Handels GmbH |
| Enerthene 1849-1 als Öl | BP Oil Deutschland GmbH |
| Zinkweiss Rotsiegel als Zinkoxid | Grillo Zinkoxid GmbH |
| EDENOR C 18 98-100 (Stearinsäure) | Cognis Deutschland GmbH |
| Vulkanox® 4020/LG als Stabilisator | Bayer AG Brunsbüttel |
| Vulkanox® HS/LG als Stabilisator | Bayer Elastomeres S.A. |
| Vulkacit® CZ/C als Kautschukchemikalie | Bayer AG Antwerpen |
| Vulkacit® D/C als Kautschukchemikalie | Bayer AG Leverkusen |
| Mahlschwefel 90/95 Chancel | Deutsche Solvay-Werke |

**Tabelle 3**

| **Beispiel / Gegenbeispiel *** | **8 *** | **9** | **10** |
|---|---|---|---|
| Buna® CB 24 | 100 | | |
| Beispiel 2 | | 100 | |
| Beispiel 5 | | | 100 |
| Ruß (IRB 7, (N330 Typ) | 60 | 60 | 60 |
| EDENOR C 18 98-100 | 2 | 2 | 2 |
| Enerthene 1849-1 | 15 | 15 | 15 |
| Vulkazit® NZ/EGC | 0,9 | 0,9 | 0,9 |
| Mahlschwefel 90/95 Chancel | 1,5 | 1,5 | 1,5 |
| Zinkoxid (IRM 91, der Firma U.S. Zinc) | 3 | 3 | 3 |

| **Mooney ML 1+4 100°C** | | | |
|---|---|---|---|
| ML 1+4 [ME] | 79 | 71 | 81 |

| **MDR (160°C, 30 min)** | | | |
|---|---|---|---|
| S' min [dNm] | 3,24 | 3,09 | 3,5 |
| S' max [dNm] | 20,9 | 17,85 | 17,76 |
| t 10 [s] | 239 | 253 | 243 |
| t 95 [s] | 777 | 775 | 772 |

| **Probekörper : Graves DIN 53515** | | | |
|---|---|---|---|
| Median Weiterreißwiderstand [N/mm] | 33 | 72 | 65 |

## Patentansprüche

1. Nanostrukturierte Polymere auf Basis von konjugierten Dienen, erhältlich durch Polymerisation konjugierter Diene mit Katalysatoren der Seltenen Erden und anschließende Umsetzung mit einem Nanokoppler, wobei als Nanokoppler solche Verbindungen eingesetzt werden, die mit dem Polymeren reagieren, zum Teil an das Polymer ankoppeln und in einer nachgelagerten Reaktion Nanostrukturen bilden, wobei sich die mittlere Molmasse dieser Nanoteilchen mindestens um den Faktor 5 erhöht, wobei die erhaltenen Polymere eine bimodale Molmassenverteilung besitzen, bei dem der hochmolekulare Anteil eine mittleren Molmasse von größer als 2.000.000 g/mol besitzt, die Menge der hochmolekularen Anteile bezogen auf das gesamte Polymer im Bereich von 1% bis 20% liegt und der Gelgehalt des gesamten Polymeren <1% beträgt und der Gehalt an 1,2-Vinyleinheiten bezogen auf das Polymere zwischen 0,3 und 1 Gew.-% beträgt.

2. Nanostrukurierte Polymere nach Anspruch 1, **dadurch gekennzeichnet, dass** sie als konjugierte Diene 1,3-Butadien, 2.3-Dimethyl-1,3-butadien, 3-Butyl-1,3-octadien, Isopren, Piperylen, 1,3-Hexadien; 1,3-Octadien und/oder 2-Phenyl- 1,3-butadien enthalten.

3. Nanostrukturierte Polymere nach Anspruch 2, **dadurch gekennzeichnet, dass** als Nanokoppler sind oligomere Silikate der Formel
X₃-Si-(O-SiX₂)ₙ-X
vorhanden sind,
wobei
X ein Alkoholat der Formel OR wobei R ein gesättigter oder teilweise ungesättiger aliphatischer Kohlenwasserstoffrest mit 1 bis 30 C-Atomen, ein cycloaliphatischer Kohlenwasserstoffrest mit 5 bis 30 C-Atomen oder ein aromatischer Kohlenwasserstoffrest mit 6 bis 30 C-Atomen ist und
n eine Zahl größer 0 ist.

4. Verfahren zur Herstellung von nanostrukturierten Polymeren auf Basis von konjugierten Dienen, **dadurch gekennzeichnet, dass** man zunächst in Gegenwart von inerten organischen, aprotischen Lösungsmitteln und in Gegenwart eines Katalysators der Seltenen Erden konjugierte Diene polymerisiert, die nach der Polymerisation erhaltenen Polymere auf Basis der genannten Monomeren mit Nanokopplern der Formel
X₃-Si-(O-SiX₂)ₙ-X
umsetzt, wobei
X ein Alkoholat der Formel OR, wobei R ein gesättigter oder teilweise ungesättiger aliphatischer Kohlenwasserstoffrest mit 1 bis 30 C-Atomen, ein cycloaliphatischer Kohlenwasserstoffrest mit 5 bis 30 C-Atomen oder ein aromatischer Kohlenwasseistoffrest mit 6 bis 30 C-Atomen ist und
n ein Zahl größer 0 ist und
die Menge der eingesetzten Nanokoppler zu Polymeren im Bereich von 0,001 bis 10 g zu 100 g liegt.

5. Verwendung der nanostrukturierten Polymere nach Anspruch 1 bis 4 zur Herstellung von Reifen und Reifenbauteiten, Golfbällen und technischen Gummiartikeln sowie kautschukverstärkten Kunststoffen, wie ABS- und HIPS-Kunststoffen.

## Claims

1. Nano-structured polymers based on conjugated dienes, obtainable via polymerization of conjugated dienes with catalysts of the rare earths and subsequent reaction with a nano-coupling agent, where the nano-coupling agents used comprise compounds which react with the polymer, to some extent coupling onto the polymer, and which form nano-structures in a downstream reaction, where the average molar mass of the said nano-particles becomes increased at least by a factor of 5, where the resultant polymers have bimodal molar mass distribution in which the high-molecular-weight fraction has an average molar mass greater than 2 000 000 g/mol, the amount of the high-molecular-weight fractions, based on the entire polymer, is in the range from 1% to 20%, and the gel content of the entire polymers is < 1% and the content of 1,2-vinyl units, based on the polymer, is from 0.3 to 1% by weight.

2. Nano-structured polymers according to Claim 1, **characterized in that** they comprise, as conjugated dienes, 1,3-butadiene, 2,3-dimethyl-1,3-butadiene, 3-butyl-1,3-octadiene, isoprene, piperylene, 1,3-hexadiene, 1,3-octadiene and/or 2-phenyl-1,3-butadiene.

3. Nano-structured polymers according to Claim 2, **characterized in that** oligomeric silicates of the formula
X₃-Si-(OSiX₂)ₙ-X,
are present as nano-coupling agent,
where
X is an alcoholate of the formula OR, where R is a saturated or to some extent unsaturated aliphatic hydrocarbon radical having from 1 to 30 carbon atoms, a cycloaliphatic hydrocarbon radical having from 5 to 30 carbon atoms or an aromatic hydrocarbon radical having from 6 to 30 carbon atoms and
n is a number greater than 0.

4. Process for the preparation of nano-structured polymers based on conjugated dienes, **characterized in that** conjugated dienes are first polymerized in the presence of inert organic, aprotic solvents and in the presence of a catalyst of the rare earths, and the polymers obtained after the polymerization reaction, based on the monomers mentioned, are reacted with nano-coupling agents of the formula
X₃-Si-(O-SiX₂)ₙ-X
where
X is an alcoholate of the formula OR, where R is a saturated or to some extent unsaturated aliphatic hydrocarbon radical having from 1 to 30 carbon atoms, a cycloaliphatic hydrocarbon radical having from 5 to 30 carbon atoms or an aromatic hydrocarbon radical having from 6 to 30 carbon atoms and
n is a number greater than 0, and
the amount of the nano-coupling agents used in relation to polymers is in the range from 0.001 to 10 g:100 g.

5. Use of the nano-structured polymers according to any of Claims 1 to 4 for the production of tyres and of tyre components, of golf balls and of technical rubber items and of rubber-reinforced plastics, such as ABS plastics and HIPS plastics.

## Revendications

1. Polymères nanostructurés à base de diènes conjugués, pouvant être obtenus par polymérisation de diènes conjugués avec des catalyseurs des terres rares suivie d'une conversion avec un nanocoupleur, dans lesquels on utilise comme nanocoupleur des composés qui réagissent avec le polymère, se couplent en partie au polymère et forment des nanostructures lors d'une réaction ultérieure, dans lesquels la masse molaire moyenne de ces nanoparticules augmente au moins du facteur 5, dans lesquels les polymères obtenus possèdent une distribution de masse molaire bimodale, dans laquelle la fraction à haut poids moléculaire possède une masse molaire moyenne de plus de 2 000 000 g/mole, la quantité des fractions à haut poids moléculaire rapportée au polymère total se situe dans la plage de 1 % à 20 % et la teneur en gel du polymère total est < 1 % et la teneur en unités 1,2-vinyliques rapportée au polymère vaut entre 0,3 et 1 % en poids.

2. Polymères nanostructurés selon la revendication 1, **caractérisés en ce qu'**ils contiennent comme diènes conjugués du 1,3-butadiène, du 2,3-diméthyl-1,3-butadiène, du 3-butyl-1,3-octadiène, de l'isoprène, du pérylène, du 1,3-hexadiène, du 1,3-octadiène et/ou du 2-phényl-1,3-butadiène.

3. Polymères nanostructurés selon la revendication 2, **caractérisés en ce qu'**il s'y trouve comme nanocoupleur des silicates oligomères de la formule
X₃-Si-(O-SiX₂)ₙ-X
dans laquelle
X est un alcoolate de la formule OR, dans laquelle R est un radical hydrocarboné aliphatique saturé ou partiellement insaturé avec 1 à 30 atomes de carbone, un radical hydrocarboné cycloaliphatique avec 5 à 30 atomes de carbone ou un radical hydrocarboné aromatique avec 6 à 30 atomes de carbone, et
n est un nombre supérieur à 0.

4. Procédé de fabrication de polymères nanostructurés à base de diènes conjugués, **caractérisé en ce que** l' on polymérise d'abord des diènes conjugués en présence de solvants organiques aprotiques inertes et en présence d'un catalyseur des terres rares, on convertit les polymères obtenus après la polymérisation à base des monomères précités avec des nanocoupleurs de la formule
X₃-Si-(O-SiX₂)ₙ-X
dans laquelle
X est un alcoolate de la formule OR, dans laquelle R est un radical hydrocarboné aliphatique saturé ou partiellement insaturé avec 1 à 30 atomes de carbone, un radical hydrocarboné cycloaliphatique avec 5 à 30 atomes de carbone ou un radical hydrocarboné aromatique avec 6 à 30 atomes de carbone, et
n est un nombre supérieur à 0, et
la quantité des nanocoupleurs utilisés par rapport aux polymères se situe dans la plage de 0,001-10 g à 100 g.

5. Utilisation des polymères nanostructurés selon une revendication 1 à 4 pour la fabrication de pneumatiques et de composants de pneumatiques, de balles de golf et d'articles techniques en caoutchouc ainsi que de matières plastiques renforcées de caoutchouc, comme des matières plastiques ABS et HIPS.
